# EUROPÄISCHE PATENTSCHRIFT

(11) **EP 2 570 027 B1**
(45) Veröffentlichungstag und Bekanntmachung des Hinweises auf die Patenterteilung: **27.03.2019**
(21) Anmeldenummer: 12401178.4
(22) Anmeldetag: 23.08.2012
(51) Int. Cl.: A01M 7/00

(54) **Mehrfachdüsenkörper für eine landwirtschaftliche Feldspritze**
Multi-nozzle body for an agricultural field spraying device
Corps à buses multiples pour un pulvérisateur agricole

(30) Priorität: 19.09.2011 DE 102011053745
(43) Veröffentlichungstag der Anmeldung: 20.03.2013
(73) Patentinhaber: Amazonen-Werke H. Dreyer GmbH & Co. KG, 49205 Hasbergen (DE)
(72) Erfinder: Austermann, Stefan, 48291 Telgte (DE); Haselroth, Hanno, 49545 Tecklenburg (DE); Langkamp, Laurenz, 49545 Tecklenburg (DE)

(56) Entgegenhaltungen:
- EP-A1- 0 015 325
- DE-A1-102006 038 688
- DE-A1-102009 044 899

## Beschreibung

Die Erfindung betrifft einen Mehrfachdüsenkörper für eine landwirtschaftliche Feldspritze gemäß des Oberbegriffes des Patentanspruches 1.

Eine Spritzeinrichtung mit Mehrfachdüsenkörpern ist beispielsweise aus der DE 10 2006 038 688 A1 bekannt. Die DE 10 2009 044 899 A1 offenbart einen Mehrwegehahn.

Ein Mehrfachdüsenkörper gemäß des Oberbegriffes des Patentanspruches 1 und ein mit derartigen Mehrfachdüsenkörper ausgestattete landwirtschaftliche Feldspritze gemäß des Oberbegriffes des Patentanspruches 4 sind durch den Prospekt AMAZONE UX Special/Super Druckvermerk MI 2449 (D) 10.09 bekannt geworden. Auf Seite 28 dieses Prospektes ist ein derartiger Mehrfachdüsenkörper beschrieben. Diese Mehrfachdüsenkörper sind an einem Verteilergestänge einer landwirtschaftlichen Feldspritze in einem Abstand von 50 cm zueinander angeordnet. An den Anschlussstutzen dieser Mehrfachdüsenkörper sind Spritzdüsen angeordnet. Weiter lassen sich, entsprechend der Abbildung auf Seite 30 des Prospektes, an den Anschlussstutzen der Düsenkörper Schleppschläuche befestigen. Hierzu werden an den Anschlussstutzen separate Schienen befestigt, an denen die Schleppschläuche in einem Abstand von 25 cm zueinander angeordnet sind.

Die Umrüstung von Spritzdüsen auf Schleppschläuche ist relativ material- und kostenaufwändig, weil für die Anordnung der Schleppschläuche separate Schienen, die mit Flüssigkeitszufuhrleitungen und den Schleppschläuchen ausgestattet sind, verwendet werden müssen. Hier werden also die Schleppschläuche nicht an den Anschlussstutzen der Mehrfachdüsenkörper angeordnet.

Der Erfindung liegt die Aufgabe zu Grunde, die Voraussetzung für eine einfachere Umrüstung der Feldspritze von Spritzdüsen auf Schleppschläuche und umgedreht vorzuschlagen sowie eine flexiblere Ausbringung des Spritzmittel zu ermöglichen.

Diese Aufgabe wird erfindungsgemäß nach Anspruch 1 dadurch gelöst, dass zumindest zwei Anschlussstutzen zumindest annähernd 25 cm beabstandet zueinander angeordnet sind, sodass an den zumindest zwei Anschlussstutzen wahlweise Spritzdüsen oder unmittelbar Schleppschläuche anordenbar sind.

Infolge dieser Maßnahme können aufgrund der Anordnung der Anschlussstutzen in einem Abstand von 25 cm zueinander die Schleppschläuche unmittelbar an den Anschlussstutzen der Mehrfachdüsenkörper angeordnet werden, weil die Mehrfachdüsenkörper zumindest zwei Anschlussstutzen aufweisen, die in einem Abstand von 25 cm zueinander angeordnet sind. Außerdem ist es möglich, für Sonderausbringfälle die Spritzdüsen in einem Abstand von 25 cm zu aktivieren, so dass in diesem engen Abstand Spritzfächer bei schwierigen Ausbringfällen erzeugt werden können.

Um in einfacher Weise eine vorteilhafte Anbringung von Schleppschläuchen und Spritzdüsen an den Mehrfachdüsenkörpern zu realisieren, ist vorgesehen, dass zumindest annähernd mittig zwischen den beiden zumindest annähernd 25 cm voneinander beabstandeten Anschlussstutzen zumindest ein weiterer Anschlussstutzen mit zugeordnetem Absperrventil an dem Mehrfachdüsenkörper angeordnet ist. Hierbei werden dann an den 25 cm auseinanderliegenden Anschlussstutzen die Schleppschläuche und an den mittig liegenden Anschlussstutzen die Spritzdüsen angeordnet.

Eine einfache Ausgestaltung des Mehrfachdüsenkörpers zur gleichzeitigen Anordnung von Spritzdüsen und Schleppschläuchen an den Anschlußstutzen des Mehrfachdüsenkörpers läßt sich dadurch erreichen, dass an zwei Anschlussstutzen jeweils entgegengesetzt nach außen führende Verlängerungsleitungen mit Anschlussstutzen für die Anordnung von Spritzdüsen und/oder Schleppschläuchen in einem Abstand zueinander von zumindest annähernd 25 cm angeschlossen sind. Hierbei ist vorteilhaft, wenn dem Mehrfachdüsenkörper mittels fernbedienbarer Abschaltelemente Ventilelement zugeordnet sind, die die Flüssigkeitszufuhr zu den jeweiligen Anschlussstutzen absperren oder freigeben.

Weiterhin wird Schutz für eine landwirtschaftliche Feldspritze mit einem sich quer zur Arbeitsrichtung erstreckenden Verteilergestänge, an dem Mehrfachdüsenkörper in einem Abstand von zumindest annähernd 50 cm zueinander angeordnet sind, in Anspruch 4 beansprucht, bei welcher die Mehrfachdüsenkörper entsprechend zumindest einem oder mehreren der Ansprüche 1 bis 3 ausgestaltet sind.

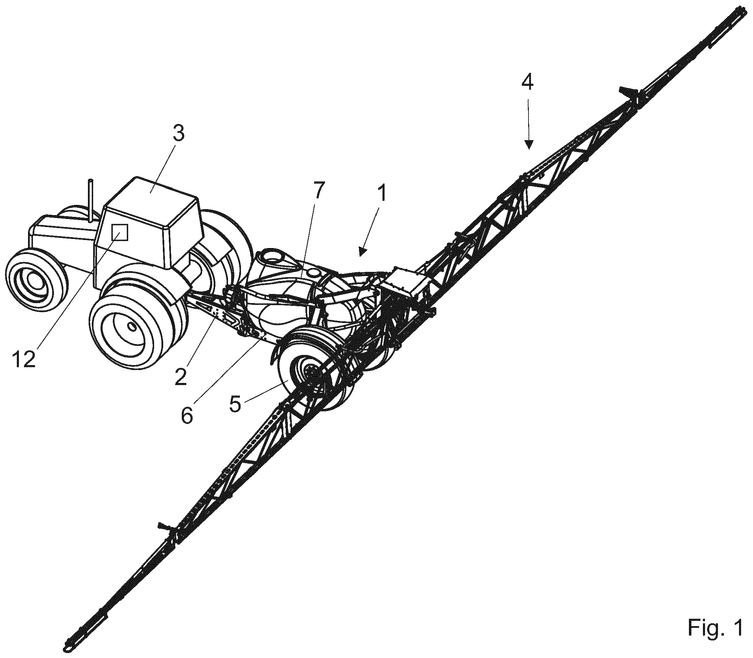

Weitere Einzelheiten der Erfindung sind der Beispielsbeschreibung und den Zeichnungen zu entnehmen. Hierbei zeigen
- Fig. 1: die landwirtschaftliche Feldspritze mit dem sich in Arbeitsstellung befindlichen Verteilergestänge mit Spritzdüsen in perspektivischer und Prinzipdarstellung,

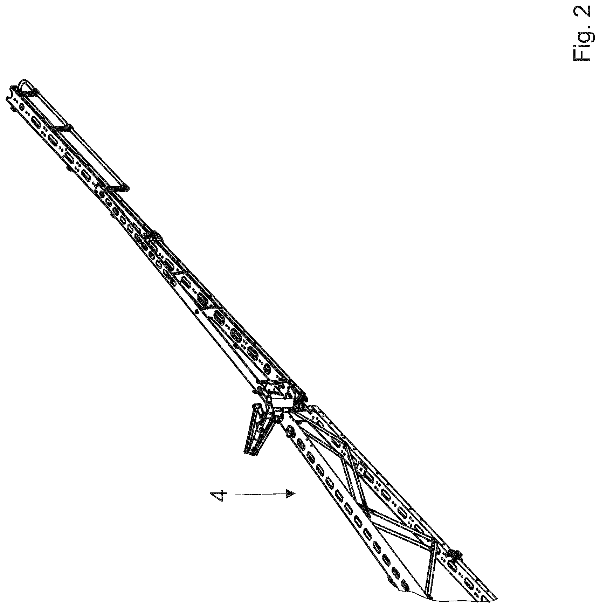

- Fig.2: der rechte Teilbereich des Verteilergestänges nach Fig.1 in gleicher Darstellungsweise, jedoch in vergrößertem Maßstab,

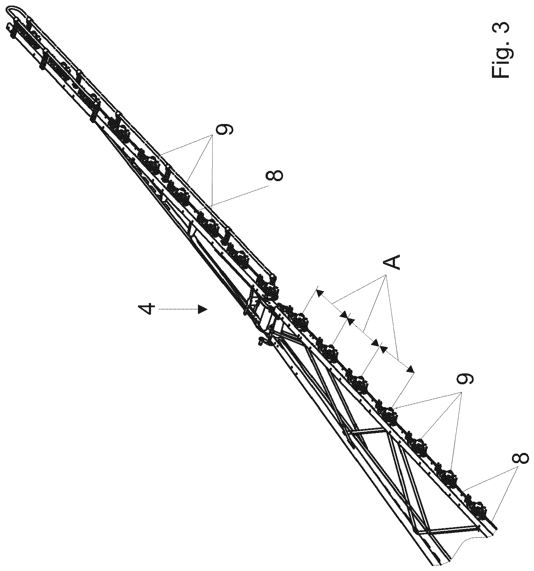

- Fig.3: der rechte Teilbereich des Verteilergestänges nach Fig.2 in einer anderen perspektivischen Darstellung,

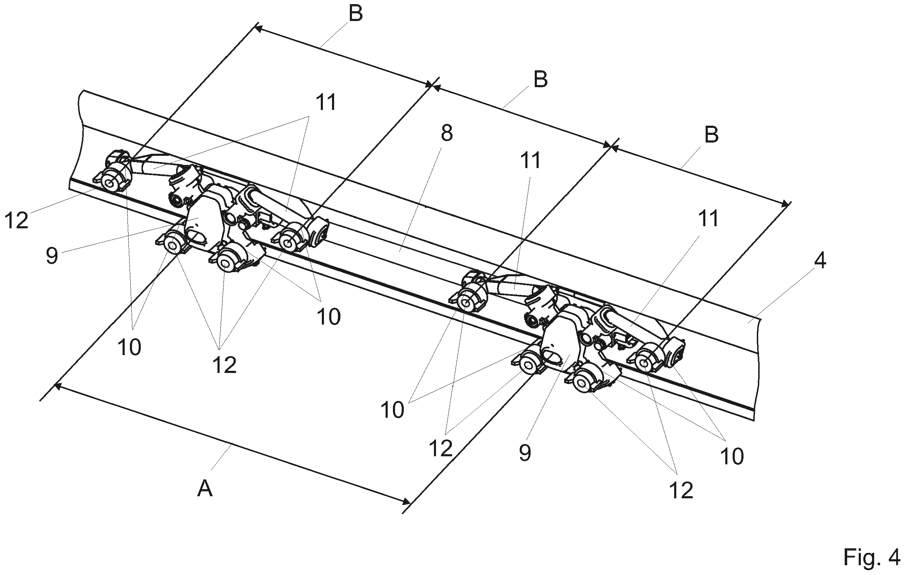

- Fig.4: zwei nebeneinander und beabstandet zueinander an dem Verteilergestänge nach den Fig. 1 bis 3 angeordnete Düsenkörper in perspektivischer Darstellung gemäß Fig.3, jedoch in einem größeren Maßstab,
- Fig. 5: die landwirtschaftliche Feldspritze mit dem sich in Arbeitsstellung befindlichen Verteilergestänge mit Spritzdüsen nach der Fig. 1 bis 4 und mit den durch diese Spritzdüsen erzeugten Spritzfächer in perspektivischer und in Prinzipdarstellung,
- Fig.6: der rechte Teilbereich des Verteilergestänges mit Spritzdüsen und mit den durch diese Spritzdüsen erzeugten Spritzfächern nach Fig.5 in gleicher Darstellungsweise, jedoch in vergrößertem Maßstab,
- Fig.7: einen Teilbereich des Verteilergestänges gemäß Fig.6, jedoch in einem größeren Maßstab in Rückansicht,
- Fig. 8: die landwirtschaftliche Feldspritze mit dem sich in Arbeitsstellung befindlichen Verteilergestänge mit an diesem angeordneten Schleppschläuchen in perspektivischer und Prinzipdarstellung,
- Fig.9: der rechte Teilbereich des Verteilergestänges mit Schleppschläuchen nach Fig.8 in gleicher Darstellungsweise, jedoch in vergrößertem Maßstab,
- Fig.10: der rechte Teilbereich des Verteilergestänges mit Schleppschläuchen nach Fig.9, jedoch in einer anderen perspektivischen Darstellung,
- Fig.11: einen Teilbereich des Verteilergestänges mit Schleppschläuchen gemäß Fig.8 in der Ansicht von hinten in vergrößertem Maßstab,
- Fig.12: einen Düsenkörper mit Schleppschläuchen in perspektivischen Darstellung gemäß Fig.10, jedoch in einem größeren Maßstab und
- Fig.13: der rechte Teilbereich des Verteilergestänges mit Spritzdüsen und mit den durch diese Spritzdüsen erzeugten Spritzfächern in der Darstellungsweise nach Fig.6, wobei die Spritzfächer von zwei beabstandeten und an einem Düsenkörper angeordneten Spritzdüsen erzeugt werden.

Die gezogene landwirtschaftliche Feldspritze 1 ist über die Deichsel 2 an den Ackerschlepper 3 angekoppelt. Die Feldspritze weist das Verteilergestänge 4, das Fahrwerk 5 und den auf dem Rahmen 6 angeordneten Vorratsbehälter 7 auf. An dem Verteilergestänge 4 sind in gleichmäßigen Abständen an der am Verteilergestänge 4 angeordneten Flüssigkeitszuleitung 8 die Anschlusßelemente für die Düsenkörpergehäuse 9 mit Anschlußstutzen 10 zum Anschluss von Spritzdüsen 11 angeordnet. Die Düsenkörpergehäuse 9 sind als Mehrfachdüsenkörper mit mehreren Anschlußstutzen 10 zur Anordnung der Spritzdüsen 11 ausgebildet. In den Düsenkörpergehäusen 10 sind jeweils als Ventilanordnung ausgebildete Abschaltelemente mit fernbedienbaren Schaltelementen angeordnet. Über diese Abschaltelemente kann die Flüssigkeitszufuhr zu den jeweiligen Anschlußstutzen und den daran angeordneten Spritzdüsen 11 zugeschaltet oder abgeschaltet werden. Die fernbedienbaren Schaltelemente der Abschaltelemente werden über eine Bedienungseinrichtung mit zugeordneter Steuerungseinrichtung, die als Bordcomputer 12, der auf dem Ackerschlepper 3 angeordnet ist, ausgebildet sein kann, angesteuert. Somit können über die Steuerungseinrichtung 12 die Abschaltelemente zur Zu- und Abschaltung der Flüssigkeitszufuhr zu den Spritzdüsen 11 jeweils separat geschaltet werden.

Die Mehrfachdüsenkörper 9 sind in einem Abstand A von 50 cm zueinander an dem Verteilergestänge 4 angeordnet. Die beiden äußeren Anschlussstutzen 10 des Düsenkörpers 9 sind in einem Abstand B von 25 cm zueinander angeordnet. Weiterhin sind die die jeweils äußeren einander benachbarten Anschlussstutzen 10 benachbarter Düsenkörper 9 ebenfalls in einem Abstand B von 25 cm zueinander angeordnet.

Die Anordnung der äußeren Anschlussstutzen 10 eines Düsenkörpers 9 wird dadurch erreicht, dass von der Mitte des Gehäuses eines Düsenkörpers nach außen führende Verlängerungsleitungen 11 mit Anschlussstutzen 10 für die Anordnung von Spritzdüsen 12 vorhanden sind.

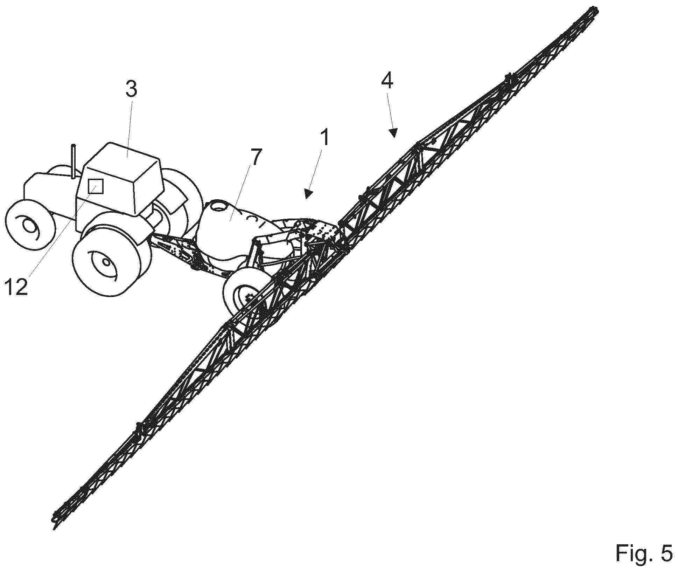

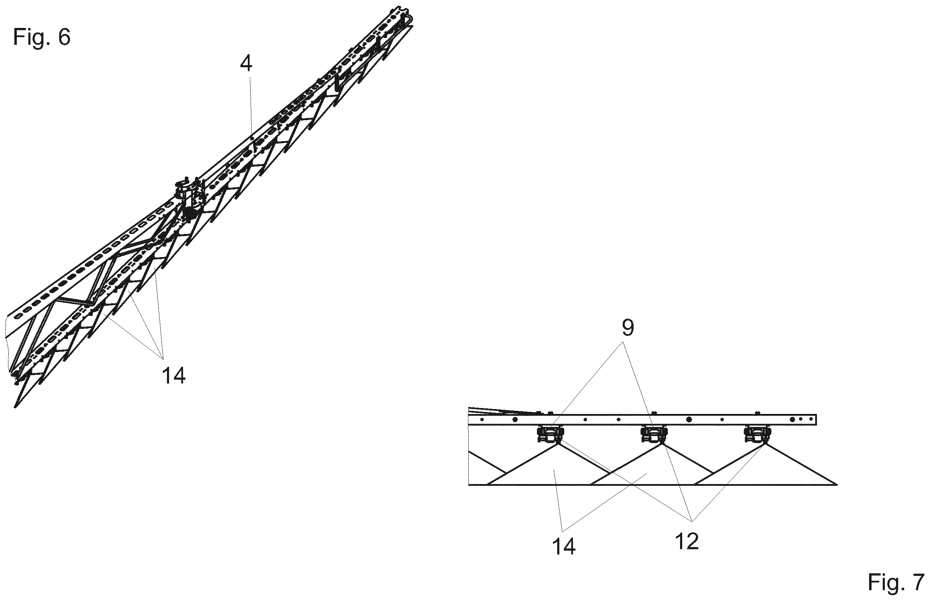

Zwischen den jeweils beiden äußeren Anschlussstutzen 9 eines Düsenkörpers 9 sind etwa mittig die beiden mittleren Anschlussstutzen 11 angeordnet. Die einzelnen Anschlussstutzen 9 sind, wie erwähnt, mit zugeordneten Absperrventilen versehen, um jeweils in gewünschter Weise dem jeweiligen Anschlussstutzen und der daran angeordneten Spritzdüsen die auszubringende Flüssigkeit zuzuführen oder den Zufluss abzusperren. Somit können die Spritzdüsen 12, wie in Fig 5 bis 7 gezeigt, bei entsprechender Flüssigkeitszuführung einen Spritzfächern 14 erzeugen.

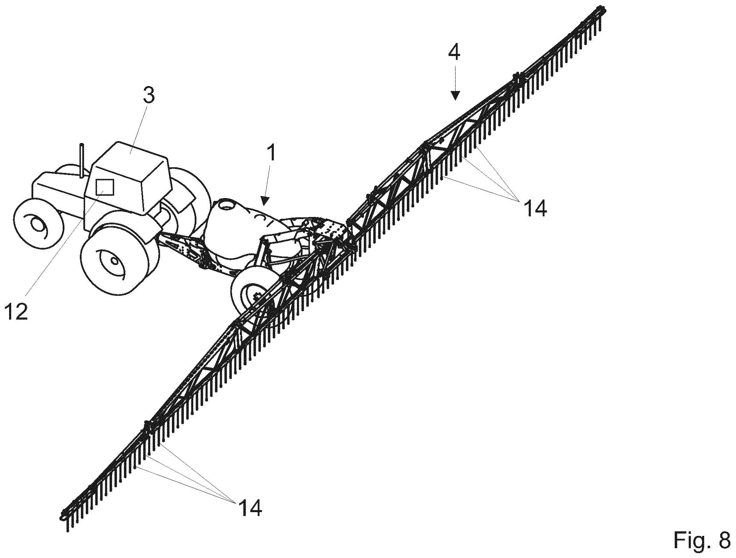

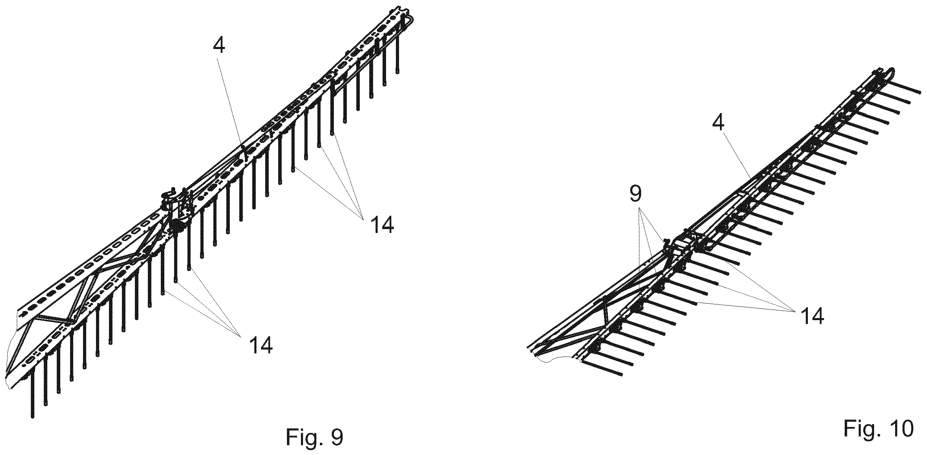

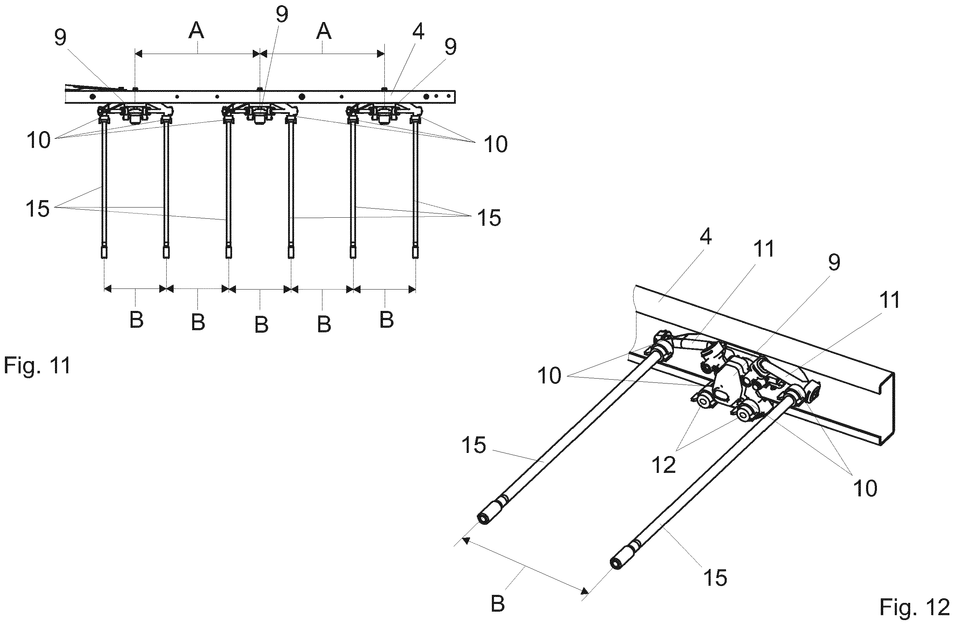

Gemäß dem Ausführungsbeispiel nach Fig. 8 bis 12 sind jeweils an den beiden äußeren Anschlussstutzen 10 eines Düsenkörpers 9 sogenannte Schleppschläuche 15 angeordnet, so dass die Schleppschläuche in einem Abstand B von 25 cm zueinander angeordnet sind. An den mittleren Anschlussstutzen 10 sind Spritzdüsen 12 angeordnet.

Somit ist also leicht zu erkennen, dass an den Anschlussstutzen 10 wahlweise Spritzdüsen oder Schleppschläuche angeordnet werden können.

Weiterhin ist leicht zu verstehen, dass durch die Anordnung der Anschlussstutzen 10 an einem Düsenkörper in einem Abstand B von 25 cm zueinander unter der Anordnung der Düsenkörper 9 in einem Abstand A von 25 cm zueinander bei gleichzeitiger Anordnung zumindest eines Düsenkörpers 9 zumindest annähernd in der Mitte zwischen den beiden äußeren Anschlussstutzen 10 wahlweise unterschiedliche Düsen- und Schleppschlauch-Konfigurationen zu verwirklichen sind.

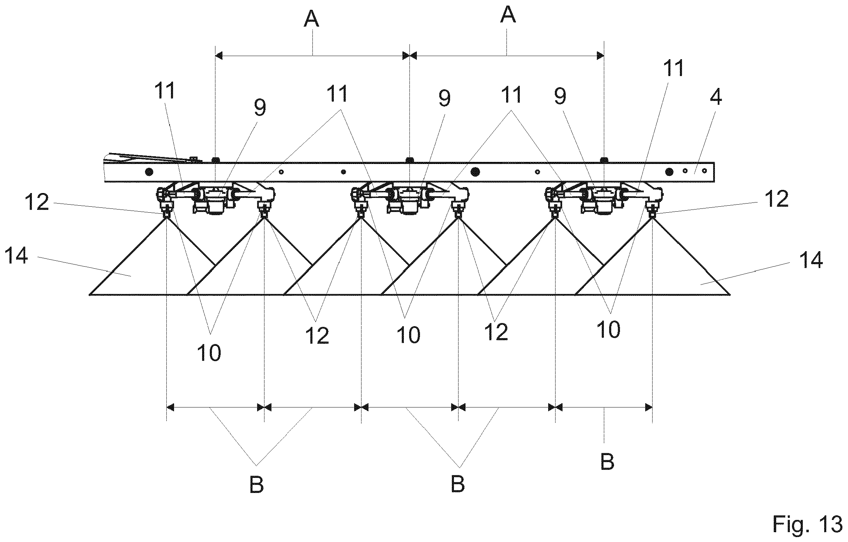

Dies zeigt auch das Ausführungsbeispiel gemäß Fig. 13, bei welchem durch die Anordnung von Spritzdüsen 12 jeweils an den beiden äußeren Anschlussstutzen 10 eines Düsenkörpers 9 Spritzfächer 14 einem Abstand B von 25 cm erzeugt werden können.

## Patentansprüche

1. Mehrfachdüsenkörper für eine landwirtschaftliche Feldspritze (1), wobei der Mehrfachdüsenkörper ein Verteilergehäuse (9) mit mehreren Anschlussstutzen (10) mit zugeordneten Absperrventilen für die Anordnung von Spritzdüsen (11) und/oder Schleppschläuchen (15) aufweist, denen über die Absperrventile die Zuführung der auszubringenden Flüssigkeit zu einem oder mehreren der Anschlussstutzen wahlweise freigebbar oder absperrbar ist, **dadurch gekennzeichnet, dass** zumindest zwei Anschlussstutzen (10) zumindest annähernd 25 cm beabstandet zueinander angeordnet sind, sodass an den zumindest zwei Anschlussstutzen (10) wahlweise Spritzdüsen oder unmittelbar Schleppschläuche anordenbar sind.

2. Mehrfachdüsenkörper nach Anspruch 1, **dadurch gekennzeichnet, dass** zumindest annähernd mittig zwischen den beiden zumindest annähernd 25 cm voneinander beabstandeten Anschlussstutzen (10) zumindest ein weiterer Anschlussstutzen (10) mit zugeordnetem Absperrventil an dem Mehrfachdüsenkörper (9) angeordnet ist.

3. Mehrfachdüsenkörper nach zumindest einem der vorstehenden Ansprüche, **dadurch gekennzeichnet, dass** an zwei Anschlussstutzen (10) jeweils entgegengesetzt nach außen führende Verlängerungsleitungen (11) mit Anschlussstutzen (10) für die Anordnung von Spritzdüsen (12) und/oder Schleppschläuchen (15) in einem Abstand (B) zueinander von zumindest annähernd 25 cm angeschlossen sind.

4. Landwirtschaftliche Feldspritze (1) mit einem sich quer zur Arbeitsrichtung erstreckenden Verteilergestänge (4), an dem Mehrfachdüsenkörper in einem Abstand von zumindest annähernd 50 cm zueinander angeordnet sind, **dadurch gekennzeichnet, dass** die Mehrfachdüsenkörper entsprechend zumindest einem der vorstehenden Ansprüche ausgestaltet sind.

## Claims

1. Multiple nozzle body for an agricultural field sprayer (1), the multiple nozzle body having a distributor housing (9) with a plurality of connector stubs (10) with associated shut-off valves for the arrangement of spray nozzles (11) and/or drag hoses (15), to which the supply of the liquid to be discharged can be selectively released or shut off to one or more of the connector stubs via the shut-off valves, **characterized in that** at least two connector stubs (10) are arranged spaced apart from one another by at least approximately 25 cm, with the result that spray nozzles can be arranged selectively or drag hoses can be arranged directly on the at least two connector stubs (10).

2. Multiple nozzle body according to Claim 1, **characterized in that** at least one further connector stub (10) with an associated shut-off valve is arranged on the multiple nozzle body (9) approximately centrally between the two connector stubs (10) which are spaced apart from one another by approximately 25 cm.

3. Multiple nozzle body according to at least one of the preceding claims, **characterized in that** extension lines (11) which lead in each case to the outside in opposite directions with connector stubs (10) for the arrangement of spray nozzles (12) and/or drag hoses (15) at a spacing (B) from one another of at least approximately 25 cm are connected on two connector stubs (10).

4. Agricultural field sprayer (1) having a distributor linkage (4) which extends transversely with respect to the working direction and on which multiple nozzle bodies are arranged at a spacing of at least approximately 50 cm from one another, **characterized in that** the multiple nozzle bodies are configured in accordance with at least one of the preceding claims.

## Revendications

1. Corps à buses multiples pour un pulvérisateur agricole (1), le corps à buses multiples présentant un boîtier de distributeur (9) avec plusieurs raccords (10) avec des soupapes d'arrêt associées pour l'agencement de buses de pulvérisation (11) et/ou de tuyaux flexibles d'épandage (15), auxquels l'alimentation du liquide à distribuer peut être libérée ou bloquée de manière sélective vers un ou plusieurs des raccords par le biais des soupapes d'arrêt, **caractérisé en ce qu'**au moins deux raccords (10) sont disposés au moins approximativement à 25 cm l'un de l'autre de telle sorte qu'au niveau d'au moins deux raccords (10), des buses de pulvérisation ou directement des tuyaux flexibles d'épandage puissent être disposés de manière sélective.

2. Corps à buses multiples selon la revendication 1, **caractérisé en ce qu'**au moins approximativement au centre entre les deux raccords (10) espacés l'un de l'autre d'au moins approximativement 25 cm, au moins un raccord supplémentaire (10) avec une soupape d'arrêt associée est disposé sur le corps à buses multiples (9).

3. Corps à buses multiples selon au moins l'une des revendications précédentes, **caractérisé en ce qu'**au niveau de deux raccords (10), des conduites de prolongement (11) conduisant à chaque fois à l'opposé vers l'extérieur sont raccordées à une distance (B) les unes des autres d'au moins approximativement 25 cm à des raccords (10) pour l'agencement de buses de pulvérisation (12) et/ou de tuyaux flexibles d'épandage (15).

4. Pulvérisateur agricole (1), comprenant une rampe distributrice (4) s'étendant transversalement à la direction de travail, sur laquelle sont disposés des corps à buses multiples à une distance d'au moins approximativement 50 cm les uns des autres, **caractérisé en ce que** les corps à buses multiples sont configurés selon au moins l'une quelconque des revendications précédentes.
